Europäisches Patentamt

European Patent Office

Office européen des brevets

(11) Publication number: **0 683 191 A1**

(19)

# EUROPEAN PATENT APPLICATION

(12)

(21) Application number: **94303609.5**

(22) Date of filing: **20.05.94**

(51) Int. Cl.6: **C08G 63/80**

(43) Date of publication of application:
**22.11.95 Bulletin 95/47**

(84) Designated Contracting States:
**DE FR GB**

(71) Applicant: **POLYPLASTICS CO. LTD.**
**3-13, Azuchicho, 2-chome**
**Chuo-Ku**
**Osaka-shi**
**Osaka 541 (JP)**

(72) Inventor: **Tanimura, Keizo**
**885-11, Miyajima**
**Fuji-shi,**
**Shizuoka (JP)**
Inventor: **Inoue, Mitsumasa**
**405-14, Matsuoka**
**Fuji-shi,**
**Shizuoka (JP)**

(74) Representative: **Jackson, Peter**
**HYDE, HEIDE & O'DONNELL**
**10-12 Priests Bridge**
**London SW15 5JE (GB)**

(54) **Process for the preparation of polybutylene terephthalate polymer having excellent resistance to hydrolysis.**

(57) To provide a process for economically and efficiently preparing a polybutylene terephthalate polymer having a high degree of polymerization and a reduced terminal carboxyl group content so as to be extremely resistant to hydrolysis.

A process for the preparation of a polybutylene terephthalate polymer, wherein the polymerization in a molten state is suspended in a stage wherein the reaction mixture exhibits an intrinsic viscosity ranging from 0.1 to 0.55 dl/g, and the reaction mixture is solidified by cooling to obtain an intermediate polymer, which is subjected to solid phase polymerization at 180 to 210 °C, whereby a polymer having an intrinsic viscosity of 0.6 dl/g or above can be obtained.

EP 0 683 191 A1

[Field of the Invention]

The present invention relates to a process for preparing a polybutylene terephthalate polymer having a reduced terminal carboxyl group content by solid phase polymerization.

[Description of the Related Art]

A polybutylene terephthalate resin is a representative general-purpose engineering plastic which is excellent in mechanical, thermal, electrical and long-term properties and so forth, and therefore has frequently been used as functional parts in mechanical, electrical and electronic fields and other industrial fields. However, this resin is problematic in resistance to hydrolysis, so that one excellent in resistance to hydrolysis has recently been required in some fields. For improving the resistance of the resin to hydrolysis, it is effective to reduce the terminal carboxyl group content thereof.

It has been a practice in the prior art to prepare polybutylene terephthalate by a process which comprises conducting the transesterification of butanediol with dimethyl terephthalate or the esterification of butanediol with terephthalic acid to form an intermediate substantially consisting of bis($\delta$-hydioxybutyl) terephthalate and melt-polycondensing this intermediate under a reduced pressure into an objective polymer having a degree of polymerization suitable for molding (i.e., a polymer having an intrinsic viscosity of 0.6 to 1.5 dl/g), or a process which comprises cooling a polymer prepared by melt polycondensation and having an intrinsic viscosity of 0.6 to 0.8 dl/g to conduct solidification and subjecting the obtained solid polymer to solid phase polymerization at a temperature below the melting point of the polymer to form a polymer having an enhanced degree of polymerization (i.e., a polymer having an intrinsic viscosity of 0.8 to 1.5 dl/g). These processes, however, failed in reducing the terminal carboxyl group content of polybutylene terephthalate sufficiently. Further, there are known methods of adding an agent that can block the terminal carboxyl group or one that can reduce the terminal carboxyl group content, but the presence of such an agent is liable to exert an adverse effect on the stability of the polymer unfavorably.

[Summary of the Invention]

The present inventors have extensively studied for the purpose of solving the above problems of the prior art to develop a process for economically and efficiently preparing a polybutylene terephthalate polymer excellent in resistance to hydrolysis, and as a result of the studies, they have found that an objective polybutylene terephthalate polymer having a reduced terminal carboxyl group content and a sufficiently high molecular weight can be prepared by suspending the polymerization for preparing a polybutylene terephthalate polymer in a molten state in a stage wherein the reaction mixture has too low a degree of polymerization to be molded conventionally, solidifying the reaction mixture by cooling, and thereafter subjecting the solid reaction mixture to solid phase polymerization. The present invention has been accomplished on the basis of this finding.

Namely, the present invention relates to a process for the preparation of a polybutylene terephthalate polymer, characterized by suspending the polymerization for preparing a polybutylene terephthalate polymer in a molten state in a stage wherein the reaction mixture exhibits an intrinsic viscosity ranging from 0.1 to 0.55 dl/g, solidifying the reaction mixture by cooling to obtain an intermediate polymer, and subjecting the intermediate polymer to solid phase polymerization at 180 to 210°C to form a polymer having an intrinsic viscosity of 0.6 dl/g or above.

[Detailed Description of the Invention]

The process according to the present invention will now be described in detail.

As described above, the process of the present invention is characterized in that the polymerization for preparing a polybutylene terephthalate polymer in a molten state is suspended in a stage therein the intermediate polymer prepared by the polymerization exhibits too low a degree of polymerization to be molded conventionally and thereafter the intermediate polymer is solidified by cooling and subjected to solid phase polymerization.

In carrying out the present invention, the polymerization in a molten state must be suspended in a stage wherein the intermediate polymer exhibits an intrinsic viscosity of 0.1 to 0.55 dl/g. When the polymerization in a molten state is suspended in a stage wherein the intermediate polymer exhibits an intrinsic viscosity of lower than 0.1 dl/g, the solid phase polymerization must be conducted at a lowered temperature because of the low melting point of the intermediate polymer to result in an extremely low rate, taking a prolonged time to prepare the objective polymer. On the other hand, when it is suspended in a stage wherein the intermediate polymer exhibits an intrinsic viscosity exceeding 0.55 dl/g, the intermediate polymer in itself exhibits too high a terminal carboxyl group content to give a polymer excellent in resistance to hydrolysis even by solid phase polymerization, and the intermediate polymer is reduced in reactive terminal group content to result in slow solid phase polymerization. Accordingly, the intrinsic viscosity of the intermediate polymer to be subjected to the solid phase polymerization according to the present invention is restricted within the above range, preferably within the range of 0.2 to 0.5 dl/g.

Further, it is preferable that the intermediate polymer have a terminal carboxyl group content of 20 equivalents/$10^6$ g or below, still preferably 15 equivalents/$10^6$ g or below. When the intermediate polymer has too high a terminal carboxyl group content, it will be difficult to prepare a polybutylene terephthalate resin excellent in resistance to hydrolysis even by solid phase polymerization.

In this specification, all intrinsic viscosity values of polybutylene terephthalate are determined by the use of o-chlorophenyl as the solvent at 25°C.

According to the present invention, the above intermediate polymer is then solidified by cooling and thereafter subjected to solid phase polymerization. When the solid phase polymerization is conducted at a temperature lower than 180°C, the polymerization rate will be low, substantially failing in the economical preparation of the objective polymer. On the other hand, the solid phase polymerization at a temperature exceeding 210°C will cause significant fusion among the intermediate polymer particles during the polymerization, resulting in troublesome operation. Accordingly, the temperature of the solid phase polymerization must be 180 to 210°C, preferably 185 to 205°C.

Further, the rate of the solid phase polymerization can be remarkably enhanced by subjecting the intermediate polymer thereto in a pulverized state, by which the objective polymer can be prepared in a short time economically advantageously. The intermediate polymer may be so pulverized as to pass through a 5-mesh screen. Furthermore, it is preferable from the standpoint of a simplified operation that the intermediate polymer be so pulverized as to pass through a 20-mesh screen (0.841 mm), because the polymerization in such a state proceeds at a uniform rate to give a stable polymer.

In carrying out the present invention, the intermediate polymer may be prepared by the conventional melt polycondensation method. More precisely, it may be prepared by conducting the transesterification of butanediol with dimethyl terephthalate or the esterification of butanediol with terephthalic acid in the presence or absence of a polymerization catalyst such as a titanium compound, and subjecting the reaction mixture to melt-polycondesation under a reduced pressure at, e.g., 200 to 260°C.

Further, the method for pulverizing the intermediate polymer is not particularly limited, but may be any of the conventional ones such as the strand method or the pelletizing method such as underwater pelletizing. Furthermore, when the intermediate polymer has too low a viscosity to be pelletized, it may he cooled and thereafter pulverized into an objective particle size by a commercially available ball mill, hammer mill or air pulverized, though the method for the pulverization is not particularly limited.

The solid phase polymerization of the intermediate polymer may be conducted either under a reduced pressure or in an atmosphere of an inert gas such as nitrogen by the heat transfer method using a heating medium, heater or the like, the induction heating method using a high-frequency wave or a combination of them. The equipment for the solid phase polymerization may be substantially any one in which the polybutylene terephthalate intermediate polymer can be retained at a predetermined temperature for a predetermined residence time and which permits the removal of a by-product such as butanediol or tetrahydrofuran. Examples of such equipment include reactors having a fixed, fluidized or moving bed, and in particular, a reactor of a vertical hopper dryer type or one of horizontal paddle dryer type is used in many cases.

The term "polybutylene terephthalate polymer" used in this specification includes not only polybutylene terephthalate homopolymers but also copolyesters mainly comprising butylene terephthalate units, e.g., copolyester resins in which at least 60% by weight of all the repeating units are butylene terephthalate units.

Such copolyester resins include those comprising polybutylene terephthalate as the major component and units prepared from a dicarboxylic acid component such as isophthalic, adipic, sebacic, dodecanedioic, naphthalene-2,6-dicarboxylic, 1,4-cyclohexanedicarboxylic, succinic or glutaric acid and a glycol component such as triethylene glycol, diethylene glycol, cyclohexane-1,4-dimethanol, pentaerythritol or polyethylene glycol as the minor component.

As described above, the process of the present invention enables the preparation of a polybutylene terephthalate polymer having an intrinsic viscosity of 0.6 dl/g or above and a terminal carboxyl group content of 20 equivalents/$10^6$ g or below, preferably 15 equivalents/$10^6$ g or below, i.e., one which has a high degree of polymerization and is excellent in resistance to hydrolysis. In this specification, the terminal carboxyl group content is one determined by the known Paul method.

As will be understood from the following examples, the process of the present invention enables the economical and efficient preparation of a polybutylene terephthalate polymer which has a high degree of polymerization and which is extremely reduced in terminal carboxyl group content and is excellent in resistance to hydrolysis.

[Example]

The present invention will now be described in detail by referring to the following Examples, though the present invention is not limited to them.

Example 1

0.08 past by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate intermediate polymer having an intrinsic viscosity (IV) of 0.36 dl/g. This intermediate polymer was examined for terminal carboxyl group content.

Then, the polybutylene terephthalate intermediate polymer was pulverized to a particle size of 7 mesh or smaller and subjected to solid phase polymerization under the conditions of 190°C and 1 mmHg for 6 hours. The obtained polybutylene terephthalate polymer was examined for intrinsic viscosity (IV) and terminal carboxyl group content.

The results are given in Table 1.

Example 2

0.08 part by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate intermediate polymer having an intrinsic viscosity (IV) of 0.36 dl/g. This intermediate polymer was examined for terminal carboxyl group content.

Then, the polybutylene terephthalate intermediate polymer was pulverized to a particle size of 20 mesh or smaller and subjected to solid phase polymerization under the conditions of 190°C and 1 mmHg for 6 hours. The obtained polybutylene terephthalate polymer was examined for intrinsic viscosity (IV) and terminal carboxyl group content.

The results are given in the Table 1.

Example 3

0.08 part by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate intermediate polymer having an intrinsic viscosity (IV) of 0.44 dl/g. This intermediate polymer was examined for terminal carboxyl group content.

Then, the polybutylene terephthalate intermediate polymer was pulverized to a particle size of 7 mesh or smaller and subjected to solid phase polymerization under the conditions of 200°C and 1 mmHg for 6 hours. The obtained polybutylene terephthalate polymer was examined for intrinsic viscosity (IV) and terminal carboxyl group content.

The results are given in the Table 1.

Example 4

0.08 part by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate intermediate polymer having an intrinsic viscosity (IV) of 0.22 dl/g. This intermediate polymer was examined for terminal carboxyl group content.

Then, the polybutylene terephthalate intermediate polymer was pulverized to a particle size of 7 mesh or smaller and subjected to solid phase polymerization under the conditions of 190°C and 1 mmHg for 6 hours. The obtained polybutylene terephthalate polymer was examined for intrinsic viscosity (IV) and terminal carboxyl group content.

The results are given in the Table 1.

Example 5

0.08 part by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate intermediate polymer having an intrinsic viscosity (IV) of 0.36 dl/g. This intermediate polymer was examined for terminal carboxyl group content.

Then, the polybutylene terephthalate intermediate polymer was pulverized, followed by the collection of polymer particles having a size of 5 mesh or larger. The collected polymer particles were subjected to solid phase polymerization under the conditions of 190°C and 1 mmHg for 18 hours. The obtained polybutylene terephthalate polymer was examined for intrinsic viscosity (IV) and terminal carboxyl group content.

The results are given in the Table 1.

Comparative Example 1

0.08 part by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate intermediate polymer having an intrinsic viscosity (IV) of 0.58 dl/g. This intermediate polymer was examined for terminal carboxyl group content.

Then, the polybutylene terephthalate intermediate polymer was pulverized to a particle size of 7 mesh or smaller and subjected to solid phase polymerization under the conditions of 190°C and 1 mmHg. The obtained polybutylene terephthalate polymer was examined for intrinsic viscosity (IV) and terminal carboxyl group content.

The results are given in the Table 1.

Comparative Example 2

0.08 part by weight of tetrabutyl titanate as a catalyst was added to a mixture comprising 100 parts by weight of dimethyl terephthalate and 56 parts by weight of 1,4-butanediol. The obtained mixture was treated according to the conventional transesterification method and thereafter melt-polycondensed to give a polybutylene terephthalate polymer having an intrinsic viscosity (IV) of 0.78 dl/g. This polymer was examined for terminal carboxyl group content.

The result is given in the Table 1.

Table 1

| | | Polymn. temp. °C | Polymn. time Hr | Intermediate polymer | | | PBT polymer | |
|---|---|---|---|---|---|---|---|---|
| | | | | particle size | IV dl/g | CEG[*1] equiv./$10^6$ g | IV dl/g | CEG*1 equiv./$10^6$ g |
| Ex. | 1 | 190 | 6 | <2.8 | 0.36 | 9.2 | 0.79 | 6.3 |
| | 2 | 190 | 6 | <0.84 | 0.36 | 9.2 | 0.95 | 3.5 |
| | 3 | 200 | 6 | <2.8 | 0.44 | 11.7 | 0.83 | 7.1 |
| | 4 | 190 | 6 | <2.8 | 0.22 | 9.7 | 0.72 | 6.5 |
| | 5 | 190 | 18 | >4.0 | 0.36 | 9.2 | 0.77 | 11.8 |
| Comp. Ex. | 1 | 190 | 9 | <2.8 | 0.58 | 25.8 | 0.79 | 24.8 |
| | 2 | 250[*2] | 3[*3] | — | — | — | 0.78 | 38.7 |

*1  terminal carboxyl group content

*2  melt-polycondensation temp.

*3  polymn. time after the completion of esterification

## Claims

1. A process for the preparation of a polybutylene terephthalate polymer, characterized by suspending the polymerization for preparing a polybutylene terephthalate polymer in a molten state in a stage wherein the reaction mixture exhibits an intrinsic viscosity ranging from 0.1 to 0.55 dl/g, solidifying the reaction mixture by cooling to obtain an intermediate polymer, and subjecting the intermediate polymer to solid phase polymerization at 180 to 210°C to form a polymer having an intrinsic viscosity of 0.6 dl/g or above.

2. The process for the preparation of a polybutylene terephthalate polymer as set forth in claim 1, wherein the intermediate polymer to be subjected to solid phase polymerization is one having a particle size of 5 mesh or smaller.

3. The process for the preparation of a polybutylene terephthalate polymer as set forth in claim 1, wherein the intermediate polymer is one having a terminal carboxyl group content of 20 equivalents/$10^6$ g or below.

4. The polybutylene terephthalate polymer prepared by the process as set forth in claim 1, which has a terminal carboxyl group content of 20 equivalents/$10^6$ g or below.

European Patent Office

# EUROPEAN SEARCH REPORT

Application Number

EP 94 30 3609

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | GB-A-2 051 100 (THE GOODYEAR TIRE & RUBBER COMPANY)<br>* claims 1-47; figures 1,2 *<br>--- | 1-4 | C08G63/80 |
| Y | EP-A-0 003 961 (THE GOODYEAR TIRE & RUBBER COMPANY)<br>* the whole document *<br>--- | 1-4 | |
| X | DATABASE WPI<br>Week 8005,<br>Derwent Publications Ltd., London, GB;<br>AN 80-07537C<br>& DD-A-138 074 (AHLERS K D) 10 October 1979<br>* abstract *<br>--- | 1-4 | |
| A | DATABASE WPI<br>Week 9209,<br>Derwent Publications Ltd., London, GB;<br>AN 92-069494<br>& JP-A-4 013 719 (POLYPLASTICS KK) 17 January 1992<br>* abstract *<br>--- | 1-4 | TECHNICAL FIELDS SEARCHED (Int.Cl.6)<br><br>C08G |
| A | EP-A-0 032 163 (CHEMISCHE WERKE HÜLS AG)<br>* page 4, line 31 - page 5, line 7; claims 1-7 *<br>----- | 1-4 | |

The present search report has been drawn up for all claims

| Place of search | Date of completion of the search | Examiner |
|---|---|---|
| THE HAGUE | 12 October 1994 | Decocker, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)